# EUROPEAN PATENT APPLICATION

(11) **EP 3 951 158 A1**
(43) Date of publication of application: **09.02.2022**
(21) Application number: 20779598.0
(22) Date of filing: 25.03.2020
(51) Int. Cl.: F02K 9/95, F02P 23/04

(54) **LASER IGNITION DEVICE, SPACE ENGINE, AND AIRCRAFT ENGINE**

(30) Priority: 28.03.2019 JP 2019064157
(71) Applicant: IHI Corporation, Koto-ku Tokyo 135-8710 (JP); IHI Aerospace Co., Ltd., Koto-Ku Tokyo 135-0061 (JP); Inter-University Research Institute Corporation National Institutes of Natural Sciences, Tokyo 181-8588 (JP)
(72) Inventor: NAGAO, Takahisa, Tokyo 135-8710 (JP); ITOU, Mitsunori, Tokyo 135-8710 (JP); IZAWA, Jun, Tokyo 135-8710 (JP); MATSUURA, Yoshiki, Tokyo 135-0061 (JP); SASAKI, Masahiro, Tokyo 135-0061 (JP); TAIRA, Takunori, Okazaki-shi, Aichi 444-8585 (JP)
(74) Representative: O'Connor, Dominic David
(86) International application number: PCT/JP2020/013200
(87) International publication number: WO 2020/196579

(57) **Abstract**

A laser ignition device (1) includes an excitation light source (2) that generates excitation light, and a pulsed laser oscillator (4) connected to the excitation light source, wherein the pulsed laser oscillator generates a plurality of pulsed light beams at a time of one ignition to produce an initial flame.

## Description

### [Technical Field]

The present disclosure relates to a laser ignition device, a space engine and an aircraft engine.

Priority is claimed on Japanese Patent Application No. 2019-064157, filed on March 28, 2019, the content of which is incorporated herein by reference.

### [Background Art]

For example, Patent Document 1 discloses an engine including a laser ignition plug. In such a laser ignition plug, a high-temperature plasma is generated by irradiating a single pulse to a fuel gas for ignition in a sub-combustion chamber provided in a cylinder head to form a flame nucleus and ignite the fuel gas.

### [Citation List]

### [Patent Document]

[Patent Document 1]
   Japanese Unexamined Patent Application No. 2016-33334

### [Summary of Invention]

### [Technical Problem]

In order to ignite a fuel gas or an air-fuel mixture, applying a predetermined amount of energy to the fuel gas or the air-fuel mixture is needed. For example, in a laser ignition device used in an aerospace engine, a large-sized laser crystal is needed to generate energy needed for ignition with a single pulse. Therefore, the laser ignition device tends to be large in size. However, in the aerospace engine, it may be difficult to mount a large-sized ignition device.

The present disclosure has been made in view of the above-mentioned problem, and an object of the present disclosure is to reduce a size of the laser ignition device.

### [Solution to Problem]

In order to achieve the aforementioned objects, a laser ignition device of a first aspect of the present disclosure includes an excitation light source that generates excitation light, and a pulsed laser oscillator connected to the excitation light source, wherein the pulsed laser oscillator generates a plurality of pulsed light beams at a time of one ignition to produce an initial flame.

In a laser ignition device of a second aspect of the present disclosure, in the first aspect, the pulsed laser oscillator generates a plurality of pulsed light beams by burst light emission.

In a laser ignition device of a third aspect of the present disclosure, the laser ignition device of the first or the second aspect includes an optical fiber that connects the excitation light source and the pulsed laser oscillator to each other.

In a laser ignition device of a fourth aspect of the present disclosure, in any one of the first to third aspects, the pulsed laser oscillator includes a laser crystal and a Q-switch that generates pulsed light beam.

A space engine of a fifth aspect of the present disclosure includes the laser ignition device of any one of the first to fourth aspects, and a combustor that burns a fuel.

An aircraft engine of a sixth aspect of the present disclosure includes the laser ignition device of any one of the first to fourth aspects, and a combustor that burns a fuel.

### [Advantageous Effects of Invention]

According to the present disclosure, a plurality of flame nuclei are produced by irradiating a plurality of pulses (pulsed light beams) at a time of one ignition to an air-fuel mixture containing a fuel gas. As a result, it is possible to apply energy in a divisional manner for a plurality of times at the time of one ignition. Therefore, there is no need to generate a large amount of energy in single pulse irradiation, and the size of the laser crystal can be reduced to reduce the size of a laser ignition device 1.

### [Brief Description of Drawings]

Fig. 1 is a schematic diagram including a laser ignition device and a space thruster according to an embodiment of the present disclosure.
Fig. 2 is a graph showing burst light emission in a laser ignition device according to an embodiment of the present disclosure.
Fig. 3 is a diagram showing a correlation between a number of burst light emissions and an ignition probability according to an embodiment of the present disclosure.
Fig. 4 is a schematic diagram showing an example in which a laser ignition device according to an embodiment of the present disclosure is applied to a combustor of an aircraft engine.

### [Description of Embodiments]

Hereinafter, an embodiment of a laser ignition device according to the present disclosure will be described with reference to the drawings.

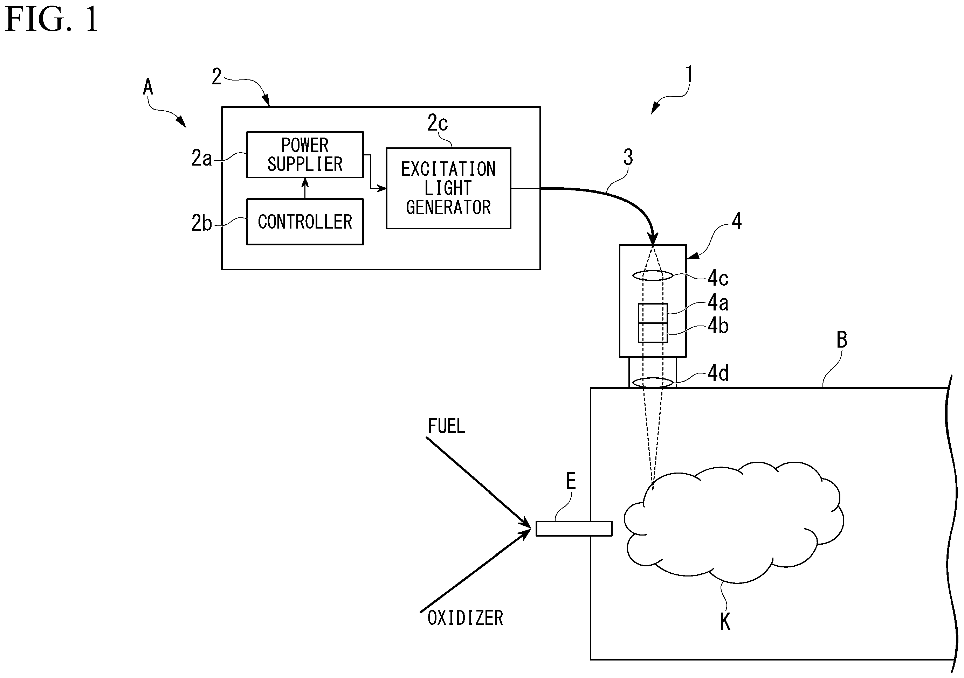

As shown in Fig. 1, the laser ignition device 1 according to the present embodiment is included in a space thruster A (space engine) and is provided at a side of a combustor B. Further, the space thruster A is a rocket engine, and includes the combustor B and the laser ignition device 1. The space thruster A is a device that generates propulsive force of a rocket by burning an air-fuel mixture K of a fuel and an oxidizer in the combustor B. The laser ignition device 1 includes an excitation light source 2, an optical fiber 3, and a pulsed laser oscillator 4.

The excitation light source 2 includes a power supplier 2a, a controller 2b that controls the power supplier 2a, and an excitation light generator 2c.

The power supplier 2a is a device that supplies power to the excitation light generator 2c. The controller 2b is a control device that controls the power of the power supplier 2a. That is, the controller 2b is a control device that controls the power supplier 2a and controls power supplied from the power supplier 2a to the excitation light generator 2c. The controller 2b is connected to, for example, a controller of the space thruster A to control the power supplier 2a according to an operating condition of the space thruster A. Further, the controller 2b may include a central processing unit (CPU), a memory such as a random access memory (RAM) and a read only memory (ROM), a storage device such as a hard disk drive (HDD) and a solid state drive (SSD), and an input/output device. The excitation light generator 2c generates excitation light using power supplied from the power supplier 2a. The excitation light source 2 is provided at a position away from the combustor B.

The optical fiber 3 connects the excitation light source 2 and the pulsed laser oscillator 4 to each other to guide excitation light generated in the excitation light generator 2c to the pulsed laser oscillator 4.

The pulsed laser oscillator 4 includes a laser crystal 4a, a Q-switch 4b, a first lens 4c, and a second lens 4d.

The laser crystal 4a is, for example, a crystal of Nd: YAG (Neodymium-Doped Yttrium Aluminum Garnet). The laser crystal 4a is configured to irradiate excitation light and reflect the excitation light by a resonator mirror (not shown). The Q-switch 4b is a device that suppresses oscillation for a predetermined period of time by controlling a Q value in the laser crystal 4a and oscillates after the atoms of the laser crystal 4a are excited. As a result, the Q-switch 4b generates a pulsed laser. Further, the Q-switch 4b can be operated in a burst light emission mode in which a large number of pulsed light beams (hereinafter, referred to as burst pulses) are generated in a short period of time. That is, the Q-switch 4b generates a plurality of pulsed light beams by burst light emission.

The first lens 4c is provided at an upper stage (upstream side) of the laser crystal 4a and the Q-switch 4b on an optical path of the excitation light guided to the pulsed laser oscillator 4 by the optical fiber 3 to focus the excitation light. The second lens 4d is provided at a position in contact with the combustor B to focus the pulsed laser generated by the Q-switch 4b on the combustible air-fuel mixture K (air-fuel mixture).

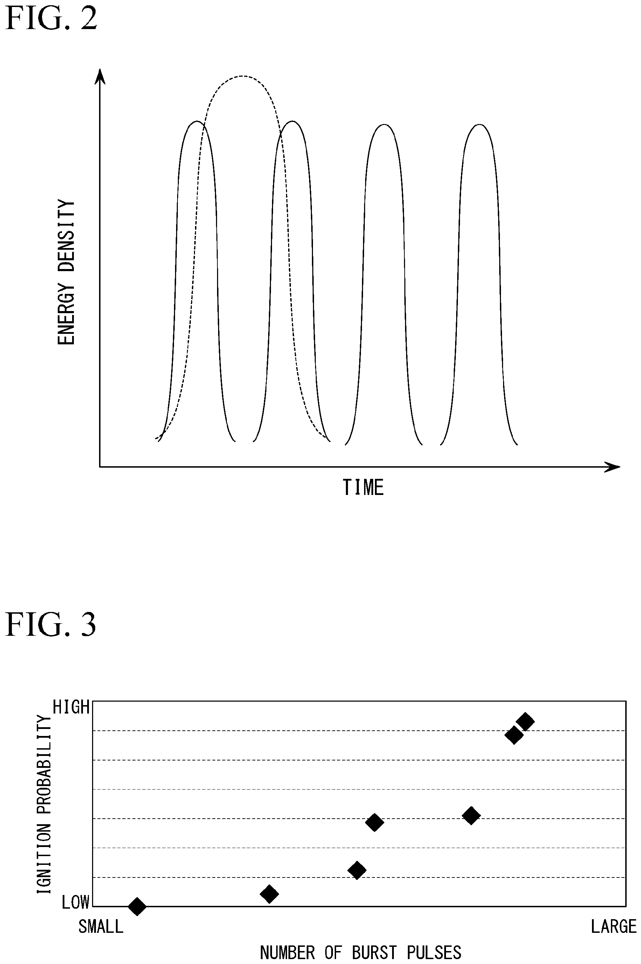

In the laser ignition device 1, when the excitation light is irradiated by the excitation light source 2, the excitation light is guided to the pulsed laser oscillator 4 by the optical fiber 3. Then, in the pulsed laser oscillator 4, the excitation light excites the laser crystal 4a. Subsequently, burst light emission is generated by the Q-switch 4b. As shown by a solid line in Fig. 2, the burst light emission shows a state in which a plurality of burst pulses (four times in Fig. 2) are generated in a short period of time. Total energy in such a plurality of burst pulses is equal to or higher than energy of conventional single pulse light emission shown by a broken line in Fig. 2. Such burst light emission is focused on the second lens 4d and then irradiated to the combustor B.

In the space thruster A, as shown in Fig. 1, the fuel and the oxidizer are each supplied to the combustor B through a fuel nozzle E. As a result, in the combustor B, the air-fuel mixture K is produced in the vicinity of the fuel nozzle E. With respect to the air-fuel mixture K, a flame nucleus is formed in the air-fuel mixture K by a plasma generated by burst light emission (by irradiating burst pulses to the air-fuel mixture K) to propagate the flame. In the combustor B, a flow of the air-fuel mixture K is formed therein, and the formed flame nucleus moves to a downstream side along the flow. Furthermore, a plurality of light emissions by the burst light emission are performed toward the same position with respect to the combustor B, thereby contributing to the formation of a plurality of flame nuclei. That is, the laser ignition device 1 forms a plurality of flame nuclei by the flow of the air-fuel mixture K formed in the combustor B without changing an irradiation position with respect to the combustor B. That is, when the laser ignition device 1 irradiates pulsed light beams a plurality of times to the flowing air-fuel mixture K at the same position in the combustor B, thereby forming a plurality of flame nuclei in the air-fuel mixture K. Then, the plurality of flame nuclei are combined while flowing to a downstream side to grow as one large initial flame. Further, one ignition in the present disclosure shows a period of time in which an initial flame formed by irradiating a pulse in the laser ignition device 1 is spread over an entire engine (combustor B) (when ignition is successful) or the formed initial flame is not spread over the entire engine (combustor B) to misfire (when ignition is failed).

Further, in the laser ignition device 1, the temperature distribution in the laser crystal 4a changes by changing an interval of burst pulses. As a result, the laser spread angle of the laser crystal 4a changes to change a focusing distance even with the same focusing lens (second lens 4d). Thereby, each burst pulse can be irradiated to a gradually different position (a different position in a traveling direction of the pulsed light beams) in the air-fuel mixture K. Therefore, it is possible to change an ignition position of the air-fuel mixture K by changing the interval of burst pulses according to a combustion state.

Fig. 3 is a graph showing a result when an ignition test is performed using the laser ignition device 1 according to the present embodiment. In this graph, the ignition test was carried out about 100 times under a condition of each number of burst pulses, and an ignition probability was calculated under each condition. As shown in Fig. 3, in the laser ignition device 1, the ignition probability tends to increase by increasing the number of burst pulses. That is, even when the energy of the burst pulses irradiated at one time is smaller than that of the single pulse, it is possible to obtain a high ignition probability by irradiating the plurality of burst pulses. Therefore, it is possible to increase energy density by burst light emission without using a large-sized laser crystal that generates a laser having a high energy density, thereby reducing the size of the laser ignition device 1. As a result, the laser ignition device 1 can be attached to the space thruster A.

In addition, according to the laser ignition device 1 according to the present embodiment, the excitation light source 2 and the pulsed laser oscillator 4 are connected by the optical fiber 3. Therefore, it is not necessary to directly attach the excitation light source 2 to the combustor B, and a degree of freedom of installation of the excitation light source 2 increases.

Although the embodiments of the present disclosure have been described above with reference to the drawings, the present disclosure is not limited to the above embodiments. The various shapes, combinations, and the like of respective constituent members shown in the above-described embodiments are merely examples, and various changes can be made based on design requirements and the like within the scope of the present disclosure defined in the claims.

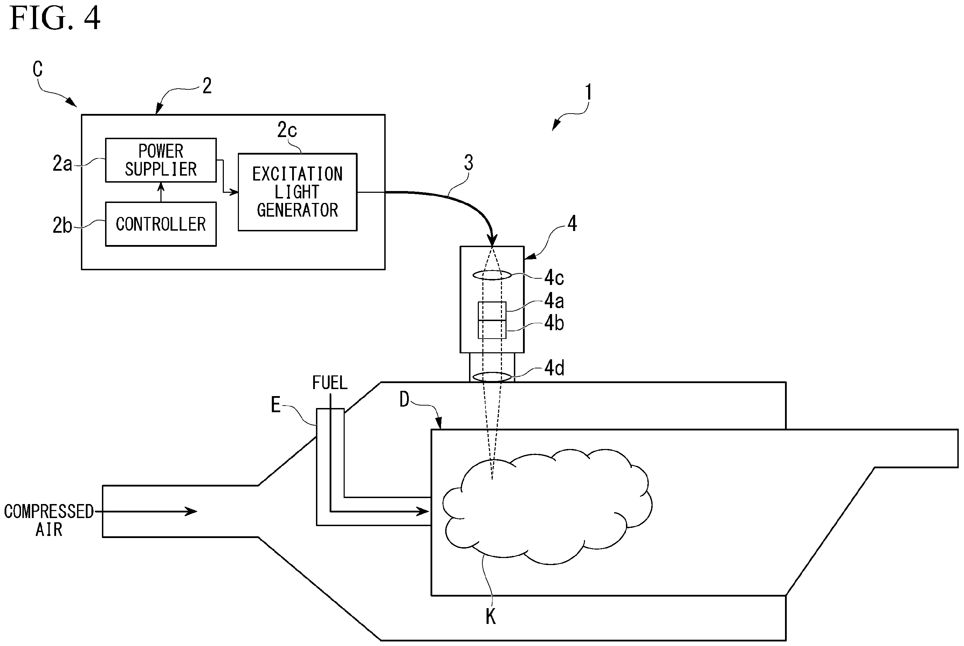

For example, as shown in Fig. 4, the laser ignition device 1 may be included in an aero engine C (aircraft engine), and provided for an annular combustor D. The aero engine C includes the annular combustor D and the laser ignition device 1, and an air passage for guiding compressed air supplied from a compressor (not shown) is disposed at an outer circumference of the annular combustor D. In such a configuration, the laser ignition device 1 is attached from a side of the annular combustor D to irradiate burst pulses to the air-fuel mixture K of the fuel injected from the fuel nozzle E and the compressed air, thereby forming a flame nucleus with respect to the air-fuel mixture K to ignite the air-fuel mixture K.

Moreover, the laser ignition device 1 may also include an amplifier that amplifies a laser beam. As a result, the laser beam can be amplified at the time of irradiation, thereby increasing the ignition probability.

In the above embodiment, the laser ignition device 1 is applied to the space thruster A and the aero engine C, but the present disclosure is not limited thereto. The laser ignition device 1 is applicable to various gas turbine engines.

Besides, the ignition probability can be further increased by changing an interval of burst pulses according to a flow velocity of the air-fuel mixture K in the combustor B or the annular combustor D. Specifically, in a case where the flow velocity in the combustor B or the annular combustor D is relatively high, the interval of burst pulses is reduced. As a result, it is possible to irradiate burst pulses in the vicinity of the generated flame nucleus before the generated flame nucleus is largely swept away, thereby producing a new flame nucleus to increase the ignition probability.

In addition, energy needed for ignition differs depending on a type and an air-fuel ratio of the fuel. Therefore, the ignition probability can be increased by changing the interval and the number of burst pulses according to the type and the air-fuel ratio of the fuel.

Moreover, the laser crystal 4a may be a crystal of Nd: YLF (Neodymium-Doped Yttrium Lithium Fluoride) or a crystal of Yb: YAG (Ytterbium-Doped Yttrium Aluminum Garnet).

### [Industrial Applicability]

The present disclosure can be used for a laser ignition device, a space engine and an aircraft engine.

### [Reference Signs List]

- 1:: Laser ignition device
- 2:: Excitation light source
- 2a:: Power supplier
- 2b:: Controller
- 2c:: Excitation light generator
- 3:: Optical fiber
- 4:: Pulsed laser oscillator
- 4a:: Laser crystal
- 4b:: Q-switch
- 4c:: First lens
- 4d:: Second lens
- A:: Space thruster
- B:: Combustor
- C:: Aero engine
- D:: Annular combustor
- E:: Fuel nozzle

## Claims

1. A laser ignition device comprising:
an excitation light source that generates excitation light; and
a pulsed laser oscillator connected to the excitation light source, wherein
the pulsed laser oscillator generates a plurality of pulsed light beams at a time of one ignition to produce an initial flame.

2. The laser ignition device according to Claim 1, wherein
the pulsed laser oscillator generates a plurality of pulsed light beams by burst light emission.

3. The laser ignition device according to Claim 1 or 2, further comprising
an optical fiber that connects the excitation light source and the pulsed laser oscillator to each other.

4. The laser ignition device according to any one of Claims 1 to 3, wherein
the pulsed laser oscillator includes a laser crystal and a Q-switch that generates pulsed light beam.

5. A space engine comprising:
the laser ignition device according to any one of Claims 1 to 4; and
a combustor that burns a fuel.

6. An aircraft engine comprising:
the laser ignition device according to any one of Claims 1 to 4; and
a combustor that burns a fuel.
